# EUROPÄISCHE PATENTSCHRIFT

(11) **EP 2 326 807 B1**
(45) Veröffentlichungstag und Bekanntmachung des Hinweises auf die Patenterteilung: **20.05.2015**
(21) Anmeldenummer: 09783015.2
(22) Anmeldetag: 15.09.2009
(51) Int. Cl.: F01N 3/20, F01N 3/28, F01N 3/023, F01N 3/035

(54) **ABGASREINIGUNGSSYSTEM FÜR DIESELMOTOREN**
EXHAUST GAS PURIFICATION SYSTEM FOR DIESEL ENGINES
SYSTÈME D'ÉPURATION DES GAZ D'ÉCHAPPEMENT POUR MOTEUR DIESEL

(30) Priorität: 24.09.2008 DE 102008048796
(43) Veröffentlichungstag der Anmeldung: 01.06.2011
(73) Patentinhaber: Emitec Gesellschaft für Emissionstechnologie mbH, 53797 Lohmar (DE)
(72) Erfinder: MÜLLER-HAAS, Klaus, 51103 Köln (DE)
(74) Vertreter: Rössler, Matthias
(86) Internationale Anmeldenummer: PCT/EP2009/061922
(87) Internationale Veröffentlichungsnummer: WO 2010/034651

(56) Entgegenhaltungen:
- WO-A1-97/01387
- WO-A1-2004/038192
- WO-A2-01/42630
- GB-A- 2 381 218
- US-A1- 2008 066 451

## Beschreibung

Die Erfindung betrifft ein Abgasreinigungssystem für Dieselmotoren, insbesondere von Nutzkraftfahrzeugen, aus in einem Abgasstrang angeordneten Abgasreinigungskomponenten, wie z. B. einem Oxidationskatalysator, einer Reduktionsmitteleinsprühvorrichtung, einem Rußpartikelabscheider, einem Reduktionskatalysator gemäß Oberbegriff des Patentanspruchs 1.

Besonders bewährt haben sich im Bereich der Abgasbehandlung von mobilen Verbrennungskraftmaschinen als Wabenkörper aufgebaute Katalysatoren und Rußpartikelabscheider, die strukturierte, Kanäle bildende, Trägerelemente (insbesondere metallische Blechfolien, Drahtvliese, etc. oder auch keramische Platten, Extrudate,...) aufweisen, wobei die Strukturen der Trägerelemente mit Mikrostrukturen versehen sein können, die Öffnungen und Strömungsleitflächen bilden, die so gerichtet sind, dass sie Teilströme der Abgase entlang den Trägerelementen von innen nach außen und/oder umgekehrt leiten.

Gerade zur Umsetzung der schädlichen Bestandteile im Abgas der Dieselmotoren kommen unterschiedliche Verfahren zum Einsatz. Zum Beispiel wird zur Reduzierung von Ruß ggf. auf das so genannte "CRT"-Verfahren zurückgegriffen, bei dem mittels im Abgas generiertem Stickstoffdioxid eine Umsetzung von Ruß bereits bei tiefen Temperaturen motiviert wird. Ebenfalls kann das so genannte SCR-Verfahren verwirklicht werden, bei dem mittels eines Reduktionsmittels (Harnstoff, Ammoniak,...) die im Abgas enthaltenen Stickoxide reduziert werden. Auch Kombinationen dieser Verfahren wurden bereits vorgeschlagen. Hierfür sind nun auch katalytische Konverter im Abgassystem anzuordnen, wobei gerade bei Nutzfahrzeugen aufgrund der Menge des produzierten Abgases Platzprobleme bei der Integration von relativ großvolumigen Konvertern auftreten können.

Daraus ergibt sich, dass sich die beschriebenen Abgasreinigungssysteme noch verbessern lassen, um das thermische Ansprechverhalten (z. B. nach einem Kaltstart) zu verbessern und um eine möglichst hohe Abgasreinigungsrate über einen langen Zeitraum zu erzielen. Des Weiteren ist eine Anpassung des Abgasreinigungssystems für Dieselmotoren von Nutzkraftfahrzeugen an die gegebenen Platzverhältnisse unter Berücksichtigung der Notwendigkeit, einen voluminösen Abgasschalldämpfer vorzusehen, um den einschlägigen gesetzlichen Bestimmungen zu genügen, anzustreben.

In der WO 2004/038 192 A1 ist ein kompaktes Abgasnachbehandlungssystem für einen Dieselmotor mit den Merkmalen des Oberbegriffs des Patentanspruchs 1 beschrieben. Bei diesem System sind in einem Gehäuse SCR-Katalysatoren, eine Zufuhrleitung für eine Harnstoff-Wasser-Lösung sowie als Oxidationskatalysator verwendete Wabenkörpermonolithen vorgesehen. Das Gehäuse wird durch einen Trennwand in eine erste seitliche Kammer und eine zweite seitliche Kammer unterteilt, wobei die Reduktionskatalysatoren in der ersten seitlichen Kammer und die Oxidationskatalysatoren und die Zufuhrleitung für wässriges Reduktionsmittel in der zweiten seitlichen Kammer angeordnet sind. Die Zufuhrleitung ist in einem Sammelrohr koaxial ausgerichtet. Es ergibt sich ein Strömungspfad durch die Komponenten Oxidationskatalysator, Zufuhrleitung und SCR-Katalysatoren. Diese Anordnung ist zwar kompakt, gleichwohl ist das Abgasnachbehandlungssystem zumindest in Teilbereichen nicht effizient gestaltet.

Dementsprechend liegt der Erfindung die Aufgabe zugrunde, die mit Bezug auf den Stand der Technik geschilderten Probleme wenigstens teilweise zu lösen. So sollen insbesondere auch konstruktive Details eines Abgasreinigungssystems für Dieselmotoren, insbesondere von Nutzkraftfahrzeugen, angegeben werden, mit denen eine effiziente Abgasreinigung erreichbar ist, das einfach und kostengünstig aufgebaut ist und eine platzsparende Anordnung zulässt.

Diese Aufgaben werden mit einem Abgasreinigungssystem gemäß den Merkmalen des Patentanspruchs 1 gelöst. Weitere vorteilhafte Ausgestaltungen der Erfindung sind in den abhängig formulierten Patentansprüchen angegeben. Es ist darauf hinzuweisen, dass sich die in den abhängig formulierten Patentansprüchen einzeln aufgeführten Merkmale in beliebiger, technologisch sinnvoller, Weise miteinander kombinieren lassen und weitere Ausgestaltungen der Erfindung definieren. Darüber hinaus werden die in den Patentansprüchen angegebenen Merkmale in der Beschreibung näher präzisiert und erläutert, wo weitere bevorzugte Ausführungsbeispiele der Erfindung dargestellt werden.

Bei dem erfindungsgemäßen Abgasreinigungssystem für Dieselmotoren sind zumindest ein Oxidationskatalysator, eine Reduktionsmitteleinsprühvorrichtung und ein Reduktionskatalysator vorgesehen, die zusammen in einem Gehäuse mit einer ersten seitlichen Kammer nahe einer ersten Stirnseite und einer zweiten seitlichen Kammer nahe einer zweiten Stirnseite angeordnet sind. Dabei ist folgende Anordnung einzuhalten:
- Der Reduktionskatalysator ist in der ersten seitlichen Kammer angeordnet.
- Der Oxidationskatalysator ist in einem äußeren Ringraum der zweiten seitlichen Kammer angeordnet.
- Die Reduktionsmitteleinsprühvorrichtung ist hin zu einem inneren Kanal des äußeren Ringraums der zweiten seitlichen Kammer ausgerichtet.
- Ein Strömungspfad für das Abgas von zumindest einem Abgaseintritt hin zu zumindest einem Abgasaustritt ist durch folgende Komponenten hindurch vorgesehen: Oxidationskatalysator, Reduktionsmitteleinsprühvorrichtung, Reduktionskatalysator.

Der Reduktionskatalysator ist bevorzugt ein SCR-Katalysator, insbesondere mit einer keramischen Wabenstruktur. Der Reduktionskatalysator dient schließlich dazu, die Stickoxide mit Hilfe des Reduktionsmittels zu Stickstoff und Wasserdampf zu reduzieren.

Der Oxidationskatalysator ist bevorzugt ein mit Edel-Metall (z. B. Platin) beschichteter kreisringartiger metallischer Wabenkörper. Der Oxidationskatalysator dient dazu, in den Abgasen enthaltene, unverbrannte Kohlenwasserstoffe und Kohlenmonoxid zu Wasser und Kohlendioxid zu oxidieren und im Abgas enthaltene Stickoxide zu NO₂ aufzuoxidieren.

Die Reduktionsmitteleinsprühvorrichtung dient insbesondere zum Eindüsen eines Fluids, wie bevorzugt einer Flüssigkeit. Als Reduktionsmittel kommen Ammoniak und/oder ein Ammoniakvorläufer (Harnstoff, AdBlue) in Betracht. Das Reduktionsmittel wird mittels einer Reduktionsmitteldosiervorrichtung über die Reduktionsmitteleinsprühvorrichtung in die Abgase eingebracht, wobei als Reduktionsmittel in erster Linie Harnstoff eingesprüht wird, der ggf. in einer Reduktionsmittelzersetzungsvorrichtung zu Ammoniak zersetzt wird.

So wird auch ein Abgasreinigungssystem für Dieselmotoren vorgeschlagen, insbesondere von Nutzkraftfahrzeugen und Non-Road-Kraftfahrzeugen, mit in einem Abgasstrang angeordneten Abgasreinigungskomponenten wie Oxidationskatalysator, Reduktionsmitteleinsprühvorrichtung und Reduktionskatalysator. Die Abgasreinigungskomponenten sind in einem Gehäuse mit einem etwa mittig im Bereich einer Trennwand am Umfang angeordneten Abgaseintritt angeordnet. Von diesem Abgaseintritt folgt das Abgas einem von der Trennwand ausgehenden, sich in Richtung einer Gehäuseabschlusswand (zweite Stirnseite) erstreckenden und mit Abstand davor endenden Ringraum, in dem ein durchströmbarer Oxidationskatalysator angeordnet ist. Dort, nahe der zweiten Stirnseite wird eine Strömungsumlenkung vorgenommen, wobei eine ausreichende Verwirbelung des Abgases einsetzt, in das nun das Reduktionsmittel eingegeben werden kann. Die Reduktionsmitteleinsprühvorrichtung ist koaxial zum Ringraum bzw. dem Kanal angeordnet und erstreckt sich durch die Gehäuseabschlusswand der zweiten Stirnseite, so dass das Reduktionsmittel in das koaxiale Rohr einsprühbar ist und dort mit den, den Kanal im Gleichstrom durchströmenden Abgasen gemischt wird. Dann tritt das Abgas-Reduktionsmittel-Gemisch in die erste Kammer mit dem Reduktionskatalysator stromab von der Trennwand im Gehäuse ein, wobei das Abgas beim Durchströmen des Reduktionskatalysators selektiv reduziert wird.

Das erfindungsgemäße Abgasreinigungssystem ist äußerst kompakt aufgebaut und lässt sich daher vorteilhafterweise in Motornähe anordnen, so dass die Abgase nur wenig abgekühlt in das Abgasreinigungssystem eintreten. Dies erhöht, zusammen mit der Tatsache, dass der im Ringraum angeordnete Oxidationskatalysator ein weiteres Abkühlen der Abgase verhindert, so dass diese in den koaxialen Kanal mit einer hohen Temperatur eintreten, dass das in diesem Kanal eingesprühte Reduktionsmittel schnell verdampft und sich mit den Abgasen mischt, was durch den durch das Rohr gebildeten, warmen Kanal im Kern des Systems begünstigt wird.

Erfindungsgemäß ist auch ein Abgasreinigungssystem, wobei der Kanal mit wenigstens einem Rußpartikelabscheider ausgeführt ist. Im Rußpartikelabscheider werden die im Dieselmotorprozess entstehenden Rußpartikel ausgefiltert und zu Kohlendioxid oxidiert.

Bevorzugt ist weiter ein Abgasreinigungssystem, wobei der Kanal mit wenigstens einem Mischelement ausgeführt ist.

Darüber hinaus wird auch als vorteilhaft angesehen, dass der Kanal mit wenigstens einem Hydrolysekatalysator ausgeführt ist. Damit kann eine Umwandlung eines Ammoniakvorläufers hin zum Ammoniak unterstützt werden.

Um das Mischen des Reduktionsmittels mit den Abgasen möglichst gründlich zu erreichen, ist im Rohr vorzugsweise ein Mischelement angeordnet, das als das Rohr ausfüllender Rußpartikelabscheider ausgebildet sein kann. Dieser Rußpartikelabscheider kann (auch) eine Katalytbeschichtung zur Reduktion und/oder Hydrolyse des Reduktionsmittels aufweisen. Insoweit kann der Kanal in Strömungsrichtung des Abgases (entlang des vorgegebenen Strömungspfades) mit verschiedenen Zonen ausgeführt sein, es ist aber auch eine Überlagerung einer Mehrzahl der vorher genannten Zonen (einteilige Ausführung) möglich.

Vorzugsweise sind der Oxidationskatalysator und/oder der Rußpartikelabscheider und/oder der Reduktionskatalysator mit strukturierten, Kanäle bildenden Trägerelementen versehen, und diese Strukturen der Trägerelemente weisen Mikrostrukturen auf, die Öffnungen und Strömungsleitflächen bilden, die so gerichtet sind, dass sie Teilströme der Abgase entlang den Trägerelementen von innen nach außen oder umgekehrt leiten. Hierdurch wird eine Vergleichmäßigung der Strömungsgeschwindigkeit über den Querschnitt der vorher erwähnten Bauelemente, eine Durchmischung der Teilströme und eine Auflösung von Laminarströmungen erreicht, wodurch die Wirksamkeit der Elemente des Abgasreinigungssystems erheblich erhöht wird.

Gemäß einer Weiterbildung wird vorgeschlagen, dass der zumindest eine Abgasaustritt zwischen dem Reduktionskatalysator und der ersten Stirnseite angeordnet ist. Das Gehäuse des Abgasreinigungssystems weist demnach stromab vom Reduktionskatalysator eine weitere Abschlusswand auf, und ein Gasaustritt kann entweder in dieser Abschlusswand oder benachbart zur Abschlusswand über den Umfang am Gehäuse angeordnet sein. Hierdurch ist eine große Freizügigkeit bei der konstruktiven Ausbildung des Abgasreinigungssystems gegeben, das sich dadurch in idealer Weise an die gegebenen räumlichen Verhältnisse anpassen lässt.

Außerdem wird als vorteilhaft angesehen, dass die Reduktionsmitteleinsprühvorrichtung hin zum Oxidationskatalysator ausgerichtet ist. Das heißt mit anderen Worten auch, dass eine nicht-zentrische Anordnung bezüglich des inneren Kanals vorliegt, so dass ein Teil des zugegebenen Reduktionsmittels (gegen den Strömungspfad des Abgases) auch die Rückwand des Oxidationskatalysators erreichen kann (wobei hier keine Edel-Metall-Beschichtung vorgesehen ist). Infolge der exothermen Reaktionen im Oxidationskatalysator ist die Rückwand regelmäßig im Betrieb sehr heiß, so dass beim Kontakt des flüssigen Reduktionsmittels mit dieser Oberfläche eine schnelle Verdampfung bzw. Thermolyse einsetzt. Zudem kann zumindest teilweise in dem von dem zugegebenen Reduktionsmittel beaufschlagten Bereich der Rückwand des Oxidationskatalysators eine Hydrolysebeschichtung vorgesehen sein. Dieser Bereich kann insbesondere als Ringsegment des ringförmigen Oxidationskatalysators ausgestaltet sein, das bevorzugt als einziger Bereich des Oxidationskatalysators von dem Reduktionsmittel beaufschlagt wird.

Gemäß einer Weiterbildung des Abgasreinigungssystems sind die erste seitliche Kammer und die zweite seitliche Kammer von einer Trennwand beabstandet, die ein Rohr zur Ausbildung des Kanals hat. Das Rohr dient z. B. auch als Träger für den ringförmigen Oxidationskatalysator. Das Rohr und die Trennwand sind bevorzugt miteinander verschweißt oder einteilig bereitgestellt.

Außerdem wird für ein solches Abgasreinigungssystem auch vorgeschlagen, dass zumindest vor dem Oxidationskatalysator oder dem Hydrolysekatalysator ein elektrischer Heizer vorgesehen ist. Das bedeutet mit anderen Worten auch, dass das Abgas zunächst den wenigstens einen Heizer durchströmt, bevor es dem Oxidationskatalysator und/oder dem Hydrolysekatalysator zugeleitet wird. Als Heizer wird bevorzugt eine elektrisch heizbare Wabenstruktur eingesetzt.

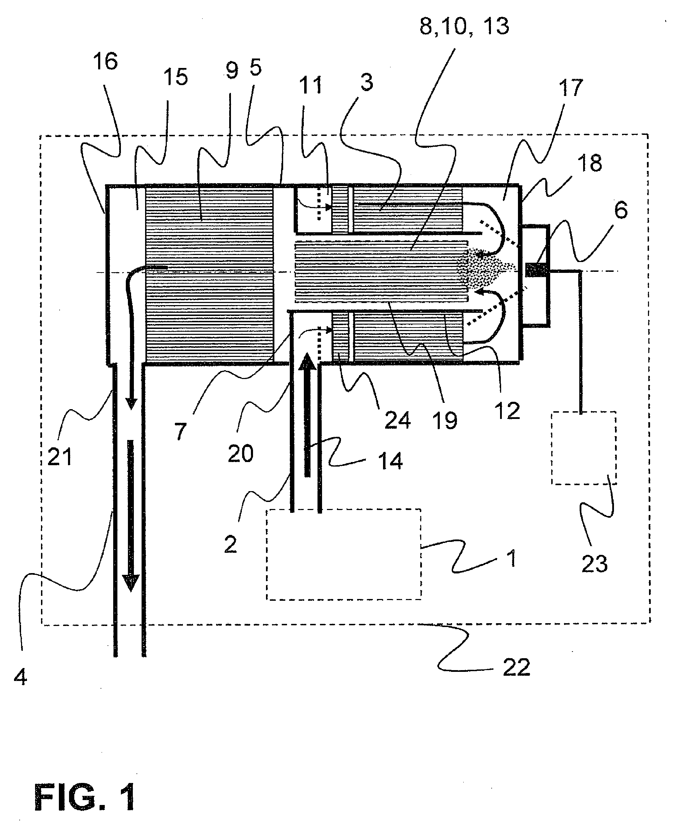

Die Erfindung sowie das technische Umfeld werden nachfolgend anhand der Fig. 1 näher erläutert. Es ist darauf hinzuweisen, dass die Figur eine besonders bevor/ zugte Ausführungsvariante der Erfindung zeigt, auf diese jedoch nicht beschränkt ist. Die Figur zeigt schematisch ein erfindungsgemäßes Abgasreinigungssystem im Schnitt.

Das in der Fig.1 dargestellte Abgasreinigungssystem ist insbesondere für Dieselmotoren von Nutzkraftfahrzeugen bestimmt. Die Leistungsanforderung an die Nutzkraftfahrzeuge ist bei gleichzeitig möglichst niedrigem Verbrauch hoch. Bei der Kraftstoffverbrennung in den einzelnen Zylindern eines Dieselmotors entstehen in erste Linie Kohlendioxid und Wasserdampf, jedoch ist die Verbrennung nicht ganz vollständig, so dass in den Abgasen unverbrannte Kohlenwasserstoffverbindungen, Kohlenmonoxid, Ruß und aufgrund der hohen Verbrennungstemperaturen Stickoxide vorhanden sind, die mittels des erfindungsgemäßen Abgasreinigungssystems möglichst weitgehend aus den Abgasen entfernt werden sollen.

Ein Dieselmotor 1 gemäß der Fig. 1 ist über ein Abgasrohr 2 mit einem Gehäuse 5 des Abgasreinigungssystems verbunden. Das Abgasrohr 2 mündet über den Umfang des Gehäuses 5 etwa mittig im Bereich einer Trennwand 7 (Abgaseintritt 20). Diese Trennwand 7 trägt ein zum Gehäuse 5 koaxiales Rohr 12, durch das zum Gehäuse 5 hin ein Ringraum 11 gebildet wird. Die Trennwand 7 unterteilt das Gehäuse 5 in eine erste seitliche Kammer 15 nahe einer ersten Stirnseite 16 und eine zweite seitliche Kammer 17 nahe einer zweiten Stirnseite 18. Das Rohr 12 endet mit Abstand vor der mit einer Abschlusswand gebildeten zweiten Stirnseite 10 des Gehäuses 5, wo die mit Pfeilen gekennzeichneten Abgase (Strömungspfad 14) umgelenkt werden und das Rohr 12 innen durch den Kanal 19 in umgekehrter Richtung durchströmen.

Im Ringraum 11 ist ein kreisringförmiger Heizer 24 und direkt stromabwärts ein Oxidationskatalysator 3 angeordnet, wo die unverbrannten, gasförmigen Bestandteile der Abgase zu Wasserdampf und Kohlendioxid oxidiert werden. Des Weiteren wird ein möglichst großer Anteil der Stickoxide in den Abgasen zu Stickstoffdioxid (NO₂) aufoxidiert.

Koaxial zum Rohr 12 ist in der zweiten Stirnseite 10 eine Reduktionsmitteleinsprühvorrichtung 6 angeordnet, die das Reduktionsmittel in die das Rohr 12 durchströmenden Abgase (und ggf. auch auf die Rückwand des Oxidationskatalysators 3) einsprüht. Hierfür ist ein Versorgungssystem 23 vorgesehen, beispielsweise Tank, Ventile, Pumpe,... zur Bereitstellung einer flüssigen Harnstoff-Wasser-Lösung.

Im Rohr 12 kann ein Mischelement 10 angeordnet sein (wie hier angedeutet), das für eine intensive Vermischung des Reduktionsmittels mit den Abgasen sorgt. Vorzugsweise ist das Mischelement als Rußpartikelabscheider 8 ausgebildet, der das Rohr 12 ausfüllt und ggf. sogar auch noch wenigstens teilweise mit einer Katalytbeschichtung zur Reduktion und/oder Hydrolyse des Reduktionsmittels versehen ist (Hydrolysekatalysator 13, ggf. mit vorgelagertem Heizer). Dieses Reduktionsmittel besteht aus Harnstoff, der durch die Katalytbeschichtung des Rußpartikelabscheiders in Wasserdampf und Ammoniak (NH₃) aufgespalten wird.

Im Rußpartikelabscheider 8 wird ein möglichst großer Anteil der in den Abgasen enthaltenen Rußpartikel aufgefangen und verbrannt. Vom Rußpartikelabscheider 8 gelangen die Abgase direkt in die erste Kammer 15 mit dem Reduktionskatalysator 9, in dem die Stickoxide katalytisch unter Zusatz des Reduktionsmittels zu Stickstoff und Wasserdampf reduziert werden. Gegebenenfalls lässt sich dem Reduktionskatalysator 9 noch eine nicht dargestellte Fangeinrichtung für überschüssiges Ammoniak nachschalten. Die aus dem Reduktionskatalysator 9 austretenden Abgase verlassen das Gehäuse 5 über einen Abgasaustritt 21 und strömen in ein Abgasrohr 4, das im dargestellten Ausführungsbeispiel am Umfang des Gehäuses 5 benachbart zu einer Abschlusswand der ersten Stirnseite 16 angeordnet ist. Je nach den räumlichen Verhältnissen lässt sich der Abgasaustritt 21 auch anders anordnen, beispielsweise koaxial zum Gehäuse 5.

Die vorliegende Erfindung ist nicht auf die dargestellten Ausführungsbeispiele beschränkt. Es sind vielmehr zahlreiche Abwandlungen der Erfindung im Rahmen der Patentansprüche möglich.

### Bezugszeichenliste

- 1: Dieselmotor
- 2: erstes Abgasrohr
- 3: Oxidationskatalysator
- 4: zweites Abgasrohr
- 5: Gehäuse
- 6: Reduktionsmitteleinsprühvorrichtung
- 7: Trennwand
- 8: Rußpartikelabscheider
- 9: Reduktionskatalysator
- 10: Mischelement
- 11: Ringraum
- 12: Rohr
- 13: Hydrolysekatalysator
- 14: Strömungspfad
- 15: erste seitliche Kammer
- 16: erste Stirnseite
- 17: zweite seitliche Kammer
- 18: zweite Stirnseite
- 19: Kanal
- 20: Abgaseintritt
- 21: Abgasaustritt
- 22: Kraftfahrzeug
- 23: Versorgungssystem
- 24: Heizer

## Patentansprüche

1. Abgasreinigungssystem für Dieselmotoren (1), bei dem zumindest ein Oxidationskatalysator (3), eine Reduktionsmitteleinsprühvorrichtung (6) und ein Reduktionskatalysator (9) vorgesehen sind, die zusammen in einem Gehäuse (5) mit einer ersten seitlichen Kammer (15) nahe einer ersten Stirnseite (16) und einer zweiten seitlichen Kammer (17) nahe einer zweiten Stirnseite (18) angeordnet sind, wobei:
- der Reduktionskatalysator (9) in der ersten seitlichen Kammer (15) angeordnet ist,
- der Oxidationskatalysator (3) in einem äußeren Ringraum (11) der zweiten seitlichen Kammer (17) angeordnet ist,
- die Reduktionsmitteleinsprühvorrichtung (6) hin zu einem inneren Kanal (19) des äußeren Ringraums (11) der zweiten seitlichen Kammer (17) ausgerichtet ist,
**dadurch gekennzeichnet, dass**
- der Kanal (19) mit wenigstens einem Rußpartikelabscheider (8) ausgeführt ist, und
- ein Strömungspfad (14) für das Abgas von zumindest einem Abgaseintritt (20) hin zu zumindest einem Abgasaustritt (21) durch folgende Komponenten hindurch vorgesehen ist: Oxidationskatalysator (3), Reduktionsmitteleinsprühvorrichtung (6), innerer Kanal (19) mit dem wenigstens einen Rußpartikelabscheider (8). Reduktionskatalysator (9).

2. Abgasreinigungssystem nach Patentanspruch 1, wobei der Kanal (19) mit wenigstens einem Mischelement (10) ausgeführt ist.

3. Abgasreinigunggssystem nach Patentanspruch 1 oder 2, wobei der Rußpartikelabscheider (8) und/oder der Reduktionskatalysator (9) mit strukturierten, Kanäle bildenden Trägerelementen versehen ist, und Strukturen der Trägerelemente weisen Mikrostrukturen auf, die Öffnungen und Strömungsleitflachen bilden, die so gerichtet sind, dass die Teilströme der Abgase entlang den Trägerelementen von innen nach außen oder umgekehrt leiten.

4. Abgasreinigungssystem nach einem der vorhergehenden Patentansprüche, bei dem der Kanal (19) mit wenigstens einem Hydrolysekatalysator (13) ausgeführt ist.

5. Abgasreinigungssystem nach einem der vorhergehenden Patentansprüche, bei dem der zumindest eine Abgasaustritt (21) zwischen dem Reduktionskatalysator (9) und der ersten Stirnseite (16) angeordnet ist.

6. Abgasreinigungssystem nach einem der vorhergehenden Patentansprüche, bei dem die Reduktionsmitteleinsprühvorrichtung (6) hin zum Oxidationskatalysator (3) ausgerichtet ist.

7. Abgasreinigungssystem nach einem der vorhergehenden Patentansprüche, bei dem die erste seitlichen Kammer (15) und die zweite seitlichen Kammer (17) von einer Trennwand (7) beabstandet sind, die ein Rohr (12) zur Ausbildung des Kanals (19) hat.

8. Abgasreinigungssystem nach Patentanspruch 7, wobei das Rohr (12) als Träger für einen ringförmigen Oxidationskatalysator (3) dient.

9. Abgasreinigungssystem nach einem der vorhergehenden Patentansprüche, bei dem zumindest vor dem Oxidationskatalysator (3) oder dem Hydrolysekatalysator (13) ein elektrischer Heizer (24) vorgesehen ist.

## Claims

1. Exhaust-gas purification system for diesel engines (1), in which at least one oxidation catalytic converter (3), a reducing agent injection device (6) and a reduction catalytic converter (9) are provided which are arranged together in a housing (5) with a first lateral chamber (15) close to a first end side (16) and a second lateral chamber (17) close to a second end side (18), wherein:
- the reduction catalytic converter (9) is arranged in the first lateral chamber (15),
- the oxidation catalytic converter (3) is arranged in an outer annular space (11) of the second lateral chamber (17),
- the reducing agent injection device (6) is directed towards an inner duct (19) of the outer annular space (11) of the second lateral chamber (17),
**characterized in that**
- the duct (19) comprises at least one soot particle separator (8), and
- a flow path (14) for the exhaust-gas from at least one exhaust-gas inlet (20) to at least one exhaust-gas outlet (21) is provided through the following components: oxidation catalytic converter (3), reducing agent injection device (6), inner duct (19) with the at least one soot particle separator (8), reduction catalytic converter (9).

2. Exhaust-gas purification system according to claim 1, wherein the duct (19) is formed with at least one mixing element (10).

3. Exhaust-gas purification system according to claim 1 or 2, wherein the soot particle separator (8) and/or the reducing agent catalytic converter (9) is provided with structured substrate elements which form ducts, and said structures of the substrate elements have microstructures which form openings and flow-guiding surfaces which are aligned so as to conduct the partial flows of the exhaust-gases along the substrate elements from the inside to the outside or vice versa.

4. Exhaust-gas purification system according to one of the preceding claims, in which the duct (19) is formed with at least one hydrolysis catalytic converter (13).

5. Exhaust-gas purification system according to one of the preceding claims, in which the at least one exhaust-gas outlet (21) is arranged between the reduction catalytic converter (9) and the first end side (16).

6. Exhaust-gas purification system according to one of the preceding claims, in which the reducing agent injection device (6) is directed towards the oxidation catalytic converter (3).

7. Exhaust-gas purification system according to one of the preceding claims, in which the first lateral chamber (15) and the second lateral chamber (17) are spaced apart by a partition (7) which has a pipe (12) serving to form the duct (19).

8. Exhaust-gas purification system according to claim 7, wherein the pipe (12) serves as a support for an annular oxidation catalytic converter (3).

9. Exhaust-gas purification system according to one of the preceding claims, in which an electric heater (24) is provided at least upstream of the oxidation catalytic converter (3) or the hydrolysis catalytic converter (13).

## Revendications

1. Système d'épuration de gaz d'échappement pour moteurs diesel (1), dans lequel sont prévus au moins un catalyseur d'oxydation (3), un dispositif d'injection d'agent réducteur (6) et un catalyseur de réduction (9), lesquels sont disposés ensemble dans un boîtier (5) avec une première chambre latérale (15) à proximité d'un premier côté frontal (16) et une deuxième chambre latérale (17) à proximité d'un deuxième côté frontal (18),
- le catalyseur de réduction (9) étant disposé dans la première chambre latérale (15),
- le catalyseur d'oxydation (3) étant disposé dans un espace annulaire extérieur (11) de la deuxième chambre latérale (17),
- le dispositif d'injection d'agent réducteur (6) étant orienté vers un canal interne (19) de l'espace annulaire extérieur (11) de la deuxième chambre latérale (17),
**caractérisé en ce que**
- le canal (19) est réalisé avec au moins un séparateur de particules de suie (8), et
- un chemin d'écoulement (14) pour le gaz d'échappement depuis au moins une entrée de gaz d'échappement (20) jusqu'à au moins une sortie de gaz échappement (21) étant prévu à travers les composants suivants : le catalyseur d'oxydation (3), le dispositif d'injection d'agent réducteur (6), le canal interne (19) avec l'au moins un séparateur de particules de suie (8), et le catalyseur de réduction (9).

2. Système d'épuration de gaz d'échappement selon la revendication 1, dans lequel le canal (19) est réalisé avec au moins un élément mélangeur (10).

3. Système d'épuration de gaz d'échappement selon la revendication 1 ou 2, dans lequel le séparateur de particules de suie (8) et/ou le catalyseur de réduction (9) sont pourvus d'éléments de support structurés, formant des canaux, et ces structures des éléments de support présentent des microstructures qui forment des ouvertures et des surfaces de guidage de l'écoulement qui sont orientées de telle sorte qu'elles guident des courants partiels des gaz d'échappement le long des éléments de support depuis l'intérieur vers l'extérieur ou inversement.

4. Système d'épuration de gaz d'échappement selon l'une quelconque des revendications précédentes, dans lequel le canal (19) est réalisé avec au moins un catalyseur d'hydrolyse (13).

5. Système d'épuration de gaz d'échappement selon l'une quelconque des revendications précédentes, dans lequel l'au moins une sortie de gaz d'échappement (21) est disposée entre le catalyseur de réduction (9) et le premier côté frontal (16).

6. Système d'épuration de gaz d'échappement selon l'une quelconque des revendications précédentes, dans lequel le dispositif d'injection d'agent réducteur (6) est orienté vers le catalyseur d'oxydation (3).

7. Système d'épuration de gaz d'échappement selon l'une quelconque des revendications précédentes, dans lequel la première chambre latérale (15) et la deuxième chambre latérale (17) sont espacées par une paroi de séparation (7) qui présente un tube (12) pour réaliser le canal (19).

8. Système d'épuration de gaz d'échappement selon la revendication 7, dans lequel le tube (12) sert de support pour un catalyseur d'oxydation de forme annulaire (3).

9. Système d'épuration de gaz d'échappement selon l'une quelconque des revendications précédentes, dans lequel un dispositif de chauffage électrique (24) est prévu au moins avant le catalyseur d'oxydation (3) ou avant le catalyseur d'hydrolyse (13).
